# EUROPÄISCHE PATENTSCHRIFT

(11) **EP 2 229 300 B1**
(45) Veröffentlichungstag und Bekanntmachung des Hinweises auf die Patenterteilung: **12.12.2012**
(21) Anmeldenummer: 08859196.1
(22) Anmeldetag: 16.10.2008
(51) Int. Cl.: B60S 1/18, B60S 1/34, B60S 1/04

(54) **SCHEIBENWISCHERANTRIEB**
WINDSHIELD WIPER DRIVE
ENTRAINEMENT D'ESSUIE-GLACE

(30) Priorität: 12.12.2007 DE 102007059905
(43) Veröffentlichungstag der Anmeldung: 22.09.2010
(73) Patentinhaber: Robert Bosch GmbH, 70442 Stuttgart (DE)
(72) Erfinder: WEGNER, Norbert, 77815 Buehl (DE); RAPP, Juergen, 77886 Lauf (DE); MUELLER, Andreas, 76863 Herxheim (DE); BOULCH, Guillaume, F-67470 Eberbach/Seltz (FR); ACKER, Christian, F-67480 Fort-Louis (FR); HARNIST, Pierre, F-67480 Roeschwoog (FR)
(86) Internationale Anmeldenummer: PCT/EP2008/063925
(87) Internationale Veröffentlichungsnummer: WO 2009/074384

(56) Entgegenhaltungen:
- EP-A- 0 806 330
- WO-A-02/22409
- DE-A1- 19 744 906
- FR-A- 2 774 340
- US-A- 4 066 291

## Beschreibung

### Stand der Technik

Die Erfindung betrifft einen Scheibenwischerantrieb für ein Kraftfahrzeug gemäß dem Oberbegriff des Anspruchs 1.

Bei heute zum Einsatz kommenden Scheibenwischerantrieben ist ein elektrischer Antriebsmotor über ein Kurbelgestänge mit der Wischerwelle verbunden. Von dem Kurbelgestänge wird eine kontinuierliche Drehbewegung des Antriebsmotors in eine oszillierende Hin- und Herbewegung der Wischerwelle umgewandelt. Nachteilig bei den bekannten Scheibenwischerantrieben ist der komplexe Aufbau und die Anzahl an benötigten Bauteilen.

Es werden daher sogenannte Scheibenwischerdirektantriebe entwickelt, bei denen auf das Vorsehen eines Kurbelgestänges verzichtet wird. Bei Scheibenwischerdirektantrieben ist entweder die Motorwelle eines reversierend betreibbaren Antriebsmotors drehfest mit der Wischerwelle verbunden, oder die Motorwelle bildet diese Wischerwelle, oder zwischen der Motorwelle und der Wischerwelle ist ein Verzahnungsgetriebe angeordnet. Nachteilig bei Scheibenwischerdirektantrieben ist, dass die Wischerwelle beim Aufbringen großer externer Verstellkräfte theoretisch um 360° verdrehbar ist. Dies kann bei Fahrten mit hoher Geschwindigkeit dazu führen, dass der an der Wischerwelle festgelegte Wischerarm aufgrund der wirkenden Kräfte in einen Bereich außerhalb der

Fahrzeugscheibe verschwenkt wird, was ein erhebliches Sicherheitsrisiko darstellt.

Aus der WO-A-02/22409 ist ein Scheibenwischerantrieb nach Gattung des Anspruchs 1 bekannt. Ein weiterer Scheibenwischerantrieb ist aus der US-A-4066291 bekannt.

### Offenbarung der Erfindung

### Technische Aufgabe

Der Erfindung liegt die Aufgabe zugrunde, einen optimierten Scheibenwischerantrieb, insbesondere einen Scheibenwischerdirektantrieb, vorzuschlagen, dessen maximaler Winkelbereich, um den die Wischerwelle verdrehbar ist, begrenzt ist.

### Technische Lösung

Diese Aufgabe wird mit einem Scheibenwischerantrieb mit den Merkmalen des Anspruchs 1 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, an einer Befestigungsplatine zum Festlegen des Scheibenwischerantriebes an einer Karosserie oder an einem karosseriefesten Bauteil eine erste Anschlagsfläche zum Begrenzen der Drehbewegung der Wischerwelle in eine erste Drehrichtung vorzusehen. Alternativ kann diese erste Endanschlagsfläche auch an einem an der Befestigungsplatine festgelegten Bauteil vorgesehen sein. Wesentlich ist, dass die erste Endanschlagsfläche derart angeordnet und ausgebildet ist, dass sie den maximalen Verdrehwinkel der Wischerwelle in eine erste Drehrichtung begrenzen kann. Hierzu muss die erste Endanschlagsfläche zum Begrenzen der Drehbewegung nicht zwangsläufig unmittelbar mit der Wischerwelle zusammenwirken - es ist auch eine Ausführungsform realisierbar, bei der die erste Endanschlagsfläche der Befestigungsplatine oder des an der Befestigungsplatine festgelegten Bauteils mit einem drehfest mit der Wischerwelle verbundenen Bauteil, insbesondere dem Wischerarm, unmittelbar zusammenwirkt. Durch das Vorsehen einer ersten Endanschlagsfläche zur Begrenzung der maximalen Drehbewegung bzw. des maximalen Drehwinkels der Wischerwelle wird vermieden, dass ein maximaler Drehwinkel von der Wischerwelle überschritten werden kann und somit der Wischbereich des Wischerarms auf der Scheibe nicht verlassen wird. Besonders bevorzugt ist eine Ausführungsform des Scheibenwischerantriebes, bei der die Endanschlagsfläche während des normalen Betriebs nicht zum Einsatz kommt, also die Wischerwelle bzw. ein an ihr festgelegtes Bauteil nicht bei jeder Verschwenkbewegung in die erste Drehrichtung an der ersten Endanschlagsfläche anschlägt. Bevorzugt ist es, dass die erste Endanschlagsfläche eine Art Nothalt oder Notbegrenzung bildet. Während des normalen Betriebs sollte die Wischerwelle durch eine entsprechende Ausbildung der Motorsteuerung vor dem Anschlagen an die Endanschlagsfläche reversiert werden. Es liegt im Rahmen der Erfindung, dass die erste Endanschlagsfläche eine untere Parkposition der Wischerwelle bzw. des Wischerarms begrenzt oder eine obere bzw. seitliche maximale Endschwenkposition.

Bei dem nach dem Konzept der Erfindung ausgebildeten Scheibenwischerantrieb handelt es sich bevorzugt um einen Scheibenwischerdirektantrieb ohne Kurbelgestänge, bei dem entweder die Wischerwelle drehfest mit der Motorwelle verbunden ist oder von der Motorwelle gebildet wird oder bei dem die Wischerwelle über ein Verzahnungs- und/oder Schneckenradgetriebe unmittelbar mit der Wischerwelle drehmomentübertragend verbunden ist, d.h. ohne die Zwischenschaltung eines Kurbelgestänges.

In Weiterbildung der Erfindung ist mit Vorteil vorgesehen, dass zusätzlich zu der ersten Endanschlagsfläche zum Begrenzen der Drehbewegung bzw. des Schwenkwinkels der Wischerwelle in eine erste Drehrichtung eine zweite Endanschlagsfläche zum Begrenzen der Drehbewegung bzw. des Schwenkwinkels der Wischerwelle in eine zweite, der ersten Drehrichtung entgegengesetzte, Drehrichtung vorgesehen ist. Anders ausgedrückt kann die Wischerwelle maximal in einem Bereich zwischen den beiden Endanschlagsflächen verstellt werden. Durch das Vorsehen von zwei in Umfangsrichtung voneinander beabstandeten Endanschlagsflächen wird somit die maximale Drehbewegung der Wischerwelle bzw. die maximale Schwenkbewegung des Wischerarms in beide Schwenkrichtungen begrenzt.

Um eine optimale Fixierung des Scheibenwischerantriebes an der Fahrzeugkarosserie zu ermöglichen, ist eine Ausführungsform bevorzugt, bei der die einteilig oder mehrteilig ausgebildete Wischerwelle die Befestigungsplatine durchsetzend angeordnet ist. Anders ausgedrückt ist in der Befestigungsplatine eine, vorzugsweise umfangsgeschlossene, Durchgangsöffnung zur Aufnahme der Wischerwelle vorgesehen.

Zum Erzielen einer besonders kompakten Bauform ist eine Ausführungsform bevorzugt, bei der die erste und/oder die zweite Endanschlagsfläche von der Innenkontur der Durchgangsöffnung gebildet werden/wird. Auch bei dieser Ausführungsform ist es bevorzugt, wenn mindestens eine der beiden Endanschlagsflächen, vorzugsweise beide Endanschlagsflächen, unmittelbar an der Befestigungsplatine ausgebildet sind. Es ist jedoch auch eine nicht beanspruchte Ausführungsform realisierbar, bei der eine oder beide Endanschlagsflächen an einem an der Befestigungsplatine festgelegten Bauteil angeordnet ist/sind.

In Hinblick auf eine kostenoptimierte Realisierung des Scheibenwischerantriebes ist eine Ausführungsform bevorzugt, bei der eine erste Gegenanschlagsfläche zum Zusammenwirken mit der ersten Endanschlagsfläche am an der Wischerwelle festgelegten Wischerarm ausgebildet ist. Bevorzugt ist an dem Wischerarm auch eine zweite Gegenanschlagsfläche zum Zusammenwirken mit der fakultativ vorzusehenden zweiten Endanschlagsfläche vorgesehen. Besonders bevorzugt befinden sich die Gegenanschlagsflächen an einem die Wischerwelle umschließenden, insbesondere umfangsgeschlossenen, Abschnitt des Wischerarms, der abschnittsweise in axialer Richtung in eine Durchgangsöffnung in der Befestigungsplatine hineinragt. Besonders bevorzugt handelt es sich zumindest bei dem Abschnitt des Wischerarms, der mindestens eine Gegenanschlagsfläche zum Zusammenwirken mit einer Endanschlagsfläche der Befestigungsplatine bzw. einer Endanschlagsfläche an einem an der Befestigungsplatine festgelegten Bauteil aufweist, um ein Spritzgussteil aus Kunststoff.

Zusätzlich oder alternativ ist eine Ausführungsform realisierbar, bei der die erste Gegenanschlagsfläche und/oder die zweite Gegenanschlagsfläche unmittelbar an der Wischerwelle oder an einem drehfest mit der Wischerwelle verbundenen Bauteil angeordnet sind. Bei diesem mindestens eine Gegenanschlagsfläche aufweisenden Bauteil handelt es sich bevorzugt um ein auf die Wischerwelle aufgepresstes Bauteil. Besonders bevorzugt ist eine Ausführungsform, bei der das Bauteil in axialer Richtung gesehen zwischen zwei Wellenteilen der Wischerwelle aufgenommen ist, wobei diese Wellenteile bevorzugt ineinandersteckbar sind.

Eine besonders kompakte Bauform des Scheibenwischerantriebes kann realisiert werden, wenn die erste und die zweite Endanschlagsfläche auf zwei voneinander abgewandten Seiten eines nach radial innen gerichteten Radialabschnitts der Befestigungsplatine angeordnet sind. Bevorzugt ragt dieser Radialabschnitt nach radial innen in die Durchgangsöffnung zur Aufnahme der Wischerwelle hinein. Alternativ wird der Radialabschnitt mit den beiden Endanschlagsflächen nicht unmittelbar von der Befestigungsplatine, sondern einem an der Befestigungsplatine festgelegten Bauteil gebildet. Um einen exakten Schwenklauf des Wischerarms relativ zu der Befestigungsplatine und gleichzeitig ein Zusammenwirken der Endanschlagsflächen mit entsprechenden Gegenanschlagsflächen zu gewährleisten, ist eine Ausführungsform bevorzugt, bei der der Radialabschnitt mit den beiden Endanschlagsflächen in radialer Richtung in eine am Wischerarm ausgebildete Führungskulisse hineinragt, wobei sich die Führungskulisse bevorzugt über einen Winkelbereich eines in axialer Richtung gerichteten Abschnitts des Wischerarms erstreckt und zu beiden in Umfangsrichtung einander gegenüberliegenden Endseiten von jeweils einer Gegenanschlagsfläche begrenzt ist.

Bei einer alternativen Ausführungsform sind die beiden Gegenanschlagsflächen nicht endseitig an einer Führungskulisse angeordnet, sondern werden von zwei voneinander abgewandten, in Umfangsrichtung voneinander beabstandeten, Seiten eines nach radial außen gerichteten Radialabschnitts der Wischerwelle gebildet. Alternativ wird der Radialabschnitt nicht unmittelbar von der Wischerwelle, sondern von einem an der Wischerwelle festgelegten Bauteil gebildet. Der Radialabschnitt mit den beiden in Umfangsrichtung beabstandeten Gegenanschlagsflächen ragt mit Vorteil in radialer Richtung in eine Führungskulisse hinein, die entweder unmittelbar an der Befestigungsplatine oder einem an der Befestigungsplatine festgelegten Bauteil angeordnet ist, wobei sich die Führungskulisse über einen Winkelbereich in Umfangsrichtung erstreckt und zu beiden in Umfangsrichtung voneinander beabstandeten Endseiten eine Endanschlagsfläche aufweist, wobei jede Endanschlagsfläche zum Zusammenwirken mit jeweils einer an dem Radialabschnitt vorgesehenen Gegenanschlagsfläche ausgebildet und angeordnet ist.

Um ein möglichst festes und exaktes Positionieren bzw. Festlegen des Scheibenwischerantriebes an der Fahrzeugkarosserie oder einem fahrzeugkarosseriefesten Bauteil zu ermöglichen, weist die Befestigungsplatine bevorzugt drei in Umfangsrichtung voneinander beabstandete Befestigungsöffnungen auf, in denen jeweils eine Befestigungsschraube aufnehmbar ist. Zusätzlich oder alternativ können anders ausgebildete Befestigungsmittel vorgesehen werden.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Fig. 1:: eine perspektivische Ansicht eines ersten Ausführungsbeispiels eines Scheibenwischerantriebes,
- Fig. 2:: eine Explosionsdarstellung des Teils des Scheibenwischerantriebes gemäß Fig. 1,
- Fig. 3:: eine perspektivische Ansicht eines zweiten, alternativen nicht beanspruchten Ausführungsbeispiels eines Scheibenwischerantriebes und
- Fig. 4:: eine Explosionsdarstellung eines Teils des Scheibenwischerantriebes gemäß Fig. 3.

### Ausführungsformen der Erfindung

In den Figuren sind gleiche Bauteile und Bauteile mit der gleichen Funktion mit den gleichen Bezugszeichen gekennzeichnet.

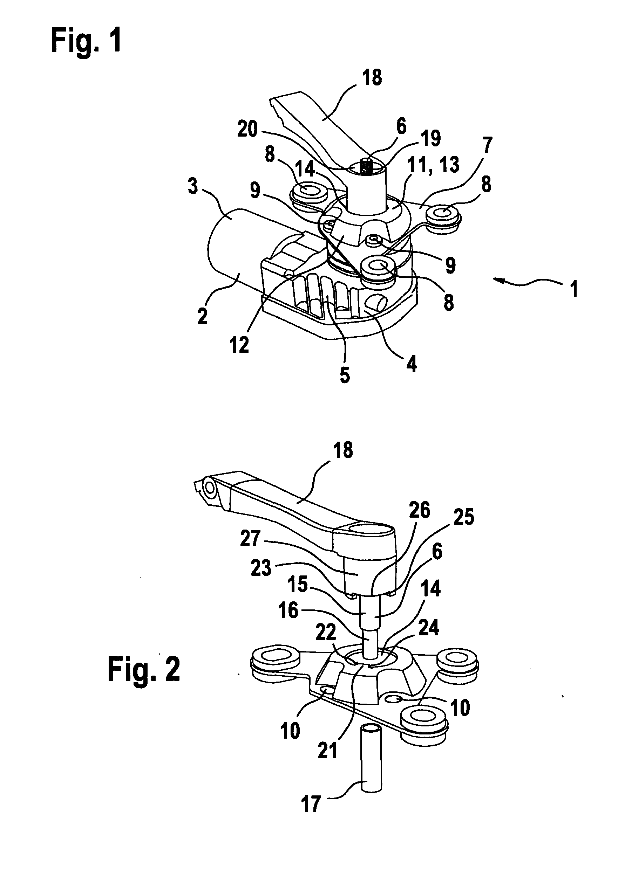

In den Fig. 1 und 2 ist ein erstes Ausführungsbeispiel eines als Scheibenwischerdirektantrieb ausgebildeten Scheibenwischerantriebes 1 gezeigt.

Der Scheibenwischerantrieb 1 umfasst einen in einem Motorgehäuse 2 angeordneten elektrischen Antriebsmotor 3, der mittels einer nicht gezeigten Motorsteuerung reversierend betreibbar ist. Der Antriebsmotor 3 ist in dem gezeigten Ausführungsbeispiel über ein in einem Getriebegehäuse 4 angeordnetes, kurbelstangenfreies Getriebe 5 mit einer Wischerwelle 6 drehmomentübertragend verbunden. Es ist auch eine Ausführungsform alternativ realisierbar, bei der auf ein Getriebe 5 verzichtet wird und die Motorwelle des Antriebsmotors 3 die Wischerwelle 6 bildet oder drehfest mit einer Wischerwelle 6 verbunden ist. In dem gezeigten Ausführungsbeispiel ist das als Tiefziehteil ausgebildete Motorgehäuse 2 an dem Getriebegehäuse 4 seitlich angeflanscht. Zum Festlegen des Scheibenwischerantriebes 1 an einer Fahrzeugkarosserie umfasst der Scheibenwischerantrieb 1 eine Befestigungsplatine 7 aus Metall mit drei in Umfangsrichtung beabstandeten Befestigungsöffnungen 8.

Mit Hilfe dreier Fixierschrauben 9, die jeweils eine Fixieröffnung 10 der Befestigungsplatine 7 durchsetzen, ist die Befestigungsplatine 7 an dem Getriebegehäuse 4 festgelegt.

Die Fixieröffnungen 10 sind randseitig an einer Erhebung 11 angeordnet, welche eine leicht schräg ansteigende Umfangswand 12 sowie einen oberen, im Wesentlichen rechtwinklig zur Umfangswand 12 verlaufenden, Ringabschnitt 13 aufweist. Der Ringabschnitt 13 begrenzt radial außen eine Durchgangsöffnung 14, die von der Wischerwelle 6 durchsetzt wird. Wie aus Fig. 2 ersichtlich ist, ist die Wischerwelle 6 zweiteilig ausgebildet und besteht aus einem oberen Wellenteil 15, das mit einem unteren Axialabschnitt 16 in ein unteres Wellenteil 17 einsteckbar ist. Mit dem oberen Wellenteil 15 ist die Wischerwelle 6 drehfest mit einem Wischerarm 18 bzw. mit einem Gelenkabschnitt eines Wischerarms 18 verbunden, an dem ein nicht gezeigtes Wischerblatt festlegbar ist. Die zweiteilige Ausbildung der Wischerwelle 6 hat den Vorteil, dass auf einfache Weise eine Wasserschutzkappe montierbar ist. Endseitig am oberen Wellenteil 15 ist ein Außengewindeabschnitt 19 vorgesehen, der zur Aufnahme einer Fixiermutter 20 dient, mittels der wiederum der Wischerarm 18 an der Wischerwelle 6 festlegbar ist.

Wie sich insbesondere aus Fig. 2 ergibt, ist die Durchgangsöffnung 14 zur Aufnahme der Wischerwelle 6 im Wesentlichen kreisförmig konturiert. An einer Stelle ist diese kreisförmige Kontur durch einen Radialabschnitt 21 unterbrochen, der in radialer Richtung nach innen in die Durchgangsöffnung 14 ragt. An der in der Zeichnungsebene linken Seite wird der Radialabschnitt 21 von einer ersten Endanschlagsfläche 22 begrenzt, die im montierten Zustand zum Begrenzen der Drehbewegung der Wischerwelle 6 mit einer ersten Gegenanschlagsfläche 23 zusammenwirkt. Auf der von der ersten Endanschlagsfläche 22 in Umfangsrichtung abgewandten Seite wird der Radialabschnitt 21 von einer zweiten Endanschlagsfläche 24 begrenzt, die im montierten Zustand mit einer zweiten Gegenanschlagsfläche 25 zusammenwirkt. Die beiden Endanschlagsflächen 22, 24 ragen dabei nach radial innen.

Die beiden Gegenanschlagsflächen 23, 25 begrenzen in Umfangsrichtung eine Führungskulisse 26 an einem sich in axialer Richtung erstreckenden Abschnitt 27 des Wischerarms 18. Dabei ist die Führungskulisse 26 als sich in Umfangsrichtung erstreckende Aussparung in der Umfangswand des Abschnittes 27 ausgebildet. Der Außendurchmesser des Abschnittes 27 entspricht im Wesentlichen dem Durchmesser der Durchgangsöffnung 14 abzüglich eines geringen Spiels, sodass der Wischerarm 18 im montierten Zustand am Innenumfang der Durchgangsöffnung 14 geführt ist, wobei der maximale Schwenkwinkel durch die größere Umfangserstreckung der Führungskulisse 26 begrenzt wird, deren in Umfangsrichtung beabstandete Endseiten, wie erwähnt, von Gegenanschlagsflächen 23, 25 gebildet sind, die mit den Endanschlagsflächen 22, 24 am radial nach innen weisenden Radialabschnitt 21 zusammenwirken.

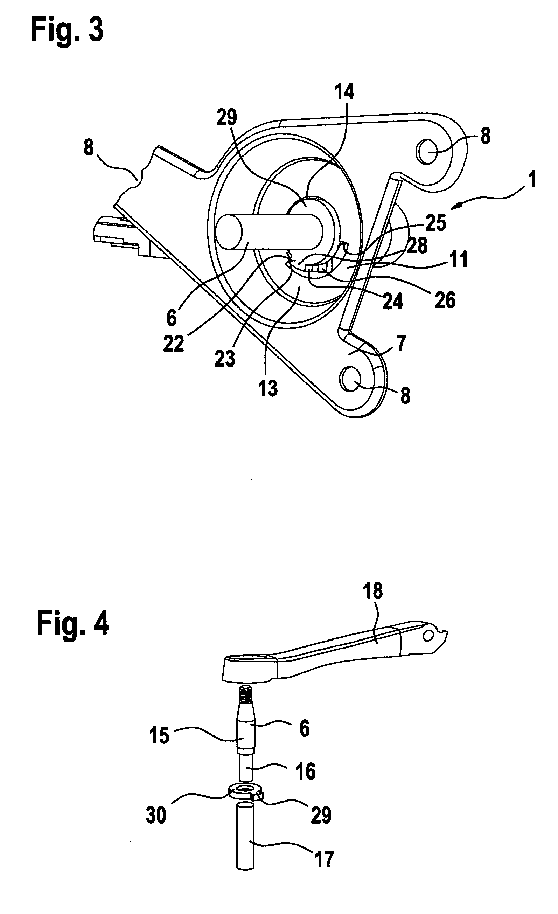

In den Fig. 3 und 4 ist ein alternatives Ausführungsbeispiel eines als Scheibenwischerdirektantrieb ausgebildeten Scheibenwischerantriebes 1 gezeigt, wobei aus Übersichtlichkeitsgründen auf die Darstellung des Antriebsmotors und des Getriebes bzw. des Getriebegehäuses verzichtet wurde. Diese können beispielsweise wie bei dem Ausführungsbeispiel gemäß den Fig. 1 und 2 ausgebildet werden. Zur Vermeidung von Wiederholungen wird im Folgenden im Wesentlichen nur auf die Unterschiede zu dem Ausführungsbeispiel gemäß Fig. 1 eingegangen. In Hinblick auf die Gemeinsamkeiten wird auf die Fig. 1 und 2 sowie die zugehörige Figurenbeschreibung verwiesen.

In Fig. 3 ist die Befestigungsplatine 7 mit ihren Befestigungsöffnungen 8 zum Festlegen des Scheibenwischerantriebes 1 an einer Fahrzeugkarosserie gezeigt. Die Befestigungsplatine 7 weist wie bei dem Ausführungsbeispiel gemäß Fig. 1 eine domartige Erhebung 11 mit einem oberen Ringabschnitt 13 auf, der eine Durchgangsöffnung 14 begrenzt, die im Wesentlichen kreisringförmig konturiert ist. In einem Winkelbereich geht die Durchgangsöffnung 14 über in eine Führungskulisse 26, die als Aussparung in der Befestigungsplatine 7 bzw. als radiale Erweiterung der Durchgangsöffnung 14 ausgebildet ist. Die Führungskulisse 26 erstreckt sich kreisbogenförmig in Umfangsrichtung und wird zu beiden in Umfangsrichtung voneinander beabstandeten Endseiten von je einer Gegenanschlagsfläche 23, 25 begrenzt. Die Gegenanschlagsflächen 23, 25 wirken zusammen mit den Endanschlagsflächen 22, 24, die einen in radialer Richtung nach außen weisenden Radialabschnitt 28 in Umfangsrichtung begrenzen. Der Radialabschnitt 28 ist an einem Bauteil 29 angeordnet, welches einen Ringabschnitt 30 aufweist (vgl. Fig. 4), der von der Wischerwelle 6, genauer von dem Axialabschnitt 16 des oberen Wellenteils 15 der Wischerwelle 6, durchsetzt wird. Das Bauteil 29 ist mit seinem Ringabschnitt 30 drehfest mit dem Axialabschnitt 16 der Welle 6 verbunden. Der Außendurchmesser des Ringabschnitts 30 entspricht dem Durchmesser der Durchgangsöffnung 14 in der Befestigungsplatine 7 abzüglich eines Spiels, sodass die Wischerwelle 6 über das Bauteil 29 an der Befestigungsplatine 7 geführt ist.

## Patentansprüche

1. Scheibenwischerantrieb für ein Kraftfahrzeug, insbesondere Scheibenwischerdirektantrieb (1), mit einem reversierend arbeitenden Antriebsmotor (3) zum Antreiben einer Wischerwelle (6), welche drehfest mit einem Wischerarm (18) verbunden ist und mit einer Befestigungsplatine (7) zum Befestigen des Scheibenwischerantriebes (1) an einer Fahrzeugkarosserie oder an einem karosseriefesten Bauteil, wobei an der Befestigungsplatine (7) eine erste Endanschlagsfläche (22) zum Begrenzen der Drehbewegung der Wischerwelle (6) in eine erste Drehrichtung vorgesehen ist und die Wischerwelle (6) eine Durchgangsöffnung (14) der Befestigungsplatine (7) durchsetzend angeordnet ist, **dadurch gekennzeichnet, dass** die erste Endanschlagsfläche (22, 24) von der Innenkontur der Durchgangsöffnung (14) gebildet wird.

2. Scheibenwischerantrieb nach Anspruch 1,
**dadurch gekennzeichnet,**
**dass** an der Befestigungsplatine (7)
eine zweite Endanschlagsfläche (24) zum Begrenzen der Drehbewegung der Wischerwelle (6) in eine zweite, der ersten Drehrichtung entgegengesetzte Drehrichtung vorgesehen ist, die von den Innenkontur der Durchgangsöffnung auch gebildet wird.

3. Scheibenwischerantrieb nach Anspruch 2,
**dadurch gekennzeichnet,**
**dass** eine erste Gegenanschlagsfläche (23) zum Zusammenwirken mit der ersten Endanschlagsfläche (22) und/oder eine zweite Gegenanschlagsfläche (25) zum Zusammenwirken mit der zweiten Endanschlagsfläche (24) am Wischerarm (18), vorzugsweise an einem die Wischerwelle (6), zumindest abschnittsweise, vorzugsweise vollständig, umschließenden Abschnitt (27) des Wischerarms (18) angeordnet sind/ist.

4. Scheibenwischerantrieb nach Anspruch 2,
**dadurch gekennzeichnet,**
**dass** eine erste Gegenanschlagsfläche (23) zum Zusammenwirken mit der ersten Endanschlagsfläche (22) und/oder eine zweite Gegenanschlagsfläche (25) zum Zusammenwirken mit der zweiten Endanschlagsfläche (24) an der Wischerwelle (6)
angeordnet sind/ist.

5. Scheibenwischerantrieb nach einem der vorhergehenden Ansprüche 3 oder 4, **dadurch gekennzeichnet,**
**dass** die erste und die zweite Endanschlagsfläche (22, 24) auf zwei voneinander abgewandten Seiten eines nach radial innen gerichteten Radialabschnitts (21) der Befestigungsplatine (7)
angeordnet sind und dass der Radialabschnitt (21) in eine am Wischerarm (18) oder an der Wischerwelle (6) oder in einem an dieser festgelegten Bauteil (29) vorgesehene, sich in Umfangsrichtung erstreckende Führungskulisse (26) ragt, die an beiden in Umfangsrichtung beabstandeten Enden jeweils eine der Gegenanschlagsflächen (23, 25) aufweist.

6. Scheibenwischerantrieb nach einem der Ansprüche 3 bis 5,
**dadurch gekennzeichnet,**
**dass** die erste und die zweite Gegenanschlagsfläche (23, 25) auf zwei voneinander abgewandten Seiten eines nach radial außen gerichteten Radialabschnitts (28) der Wischerwelle (6)
ausgebildet sind, und dass der Radialabschnitt (28) in eine an der Befestigungsplatine (7) oder an einem an der Befestigungsplatine (7) festgelegten Bauteil vorgesehene, sich in Umfangsrichtung erstreckende Führungskulisse (7) ragt, die an beiden in Umfangsrichtung beabstandeten Enden jeweils eine Endanschlagsfläche (22, 24) aufweist.

7. Scheibenwischerantrieb nach einem der vorhergehenden Ansprüche,
**dadurch gekennzeichnet,**
**dass** die Befestigungsplatine (7) drei in Umfangsrichtung voneinander beabstandete Befestigungsöffnungen (8) aufweist.

## Claims

1. Windscreen wiper drive for a motor vehicle, in particular a windscreen wiper direct drive (1), with a driving motor (3) which operates in a reversing manner and is intended for driving a wiper shaft (6), which is connected to a wiper arm (18) for conjoint rotation, and with a fastening plate (7) for fastening the windscreen wiper drive (1) to a vehicle body or to a component mounted on the vehicle body, wherein a first end stop surface (22) for limiting the rotational movement of the wiper shaft (6) in a first direction of rotation is provided on the fastening plate (7), and the wiper shaft (6) is arranged passing through a passage opening (14) in the fastening plate (7), **characterized in that** the first end stop surface (22) is formed by the inner contour of the passage opening (14).

2. Windscreen wiper drive according to Claim 1, **characterized in that** a second end stop surface (24) for limiting the rotational movement of the wiper shaft (6) in a second direction of rotation opposed to the first direction of rotation is provided on the fastening plate (7), said second end stop surface also being formed by the inner contour of the passage opening.

3. Windscreen wiper drive according to Claim 2, **characterized in that** a first counter stop surface (23) for interaction with the first end stop surface (22) and/or a second counter stop surface (25) for interaction with the second end stop surface (24) are/is arranged on the wiper arm (18), preferably on a section (27) of the wiper arm (18), which section at least partially, preferably completely, surrounds the wiper shaft (6).

4. Windscreen wiper drive according to Claim 2, **characterized in that** a first counter stop surface (23) for interaction with the first end stop surface (22) and/or a second counter stop surface (25) for interaction with the second end stop surface (24) are/is arranged on the wiper shaft (6).

5. Windscreen wiper drive according to either of the preceding claims 3 and 4, **characterized in that** the first and the second end stop surfaces (22, 24) are arranged on two sides, which face away from each other, of a radially inwardly directed radial section (21) of the fastening plate (7), and **in that** the radial section (21) projects into a guide slot (26), which is provided on the wiper arm (18) or on the wiper shaft (6) or in a component (29) fixed to the latter, extends in the circumferential direction and has one of the counter stop surfaces (23, 25) at each of the two ends spaced apart in the circumferential direction.

6. Windscreen wiper drive according to one of Claims 3 to 5, **characterized in that** the first and the second counter stop surfaces (23, 25) are formed on two sides, which face away from each other, of a radially outwardly directed radial section (28) of the wiper shaft (6), and **in that** the radial section (28) projects into a guide slot (26), which is provided on the fastening plate (7) or on a component fixed to the fastening plate (7), extends in the circumferential direction and has an end stop surface (22, 24) at each of the two ends which are spaced apart in the circumferential direction.

7. Windscreen wiper drive according to any of the preceding claims, **characterized in that** the fastening plate (7) has three fastening openings (8) which are spaced apart from one another in the circumferential direction.

## Revendications

1. Entraînement d'essuie-glace pour un véhicule automobile, en particulier entraînement direct d'essuie-glace (1), comprenant un moteur d'entraînement (3) fonctionnant de manière réversible pour entraîner un arbre d'essuie-glace (6) qui est relié de manière solidaire en rotation à un bras d'essuie-glace (18), et comprenant une platine de fixation (7) pour fixer l'entraînement d'essuie-glace (1) à une carrosserie de véhicule ou à une partie structurale fixée à la carrosserie, une première surface de butée d'extrémité (22) étant prévue sur la platine de fixation (7) pour limiter le mouvement de rotation de l'arbre d'essuie-glace (6) dans un premier sens de rotation, et l'arbre d'essuie-glace (6) est disposé de manière à traverser une ouverture traversante (14) de la platine de fixation (7), **caractérisé en ce que** la première surface de butée d'extrémité (22) est formée par le contour intérieur de l'ouverture traversante (14).

2. Entraînement d'essuie-glace selon la revendication 1,
**caractérisé en ce**
**qu'**une deuxième surface de butée d'extrémité (24) est prévue sur la platine de fixation (7) pour limiter le mouvement de rotation de l'arbre d'essuie-glace (6) dans un deuxième sens de rotation opposé au premier sens de rotation, laquelle deuxième surface de butée d'extrémité est également formée par le contour intérieur de l'ouverture traversante.

3. Entraînement d'essuie-glace selon la revendication 2,
**caractérisé en ce**
**qu'**une première surface de butée conjuguée (23) est disposée, pour coopérer avec la première surface de butée d'extrémité (22), sur le bras d'essuie-glace (18), de préférence sur une section (27) du bras d'essuie-glace (18) entourant au moins par sections, de préférence complètement, l'arbre d'essuie-glace (6) et/ou une deuxième surface de butée conjuguée (25) est disposée, pour coopérer avec la deuxième surface de butée d'extrémité (24), sur le bras d'essuie-glace (18), de préférence sur une section (27) du bras d'essuie-glace (18) entourant au moins par sections, de préférence complètement, l'arbre d'essuie-glace (6).

4. Entraînement d'essuie-glace selon la revendication 2,
**caractérisé en ce**
**qu'**une première surface de butée conjuguée (23) est disposée sur l'arbre d'essuie-glace (6) pour coopérer avec la première surface de butée d'extrémité (22) et/ou une deuxième surface de butée conjuguée (25) est disposée sur l'arbre d'essuie-glace (6) pour coopérer avec la deuxième surface de butée d'extrémité (24).

5. Entraînement d'essuie-glace selon la revendication 3 ou 4,
**caractérisé en ce que**
les première et deuxième surfaces de butée d'extrémité (22, 24) sont disposées sur deux côtés opposés l'un à l'autre d'une section radiale (21) de la platine de fixation (7) qui est orientée radialement vers l'intérieur, et **en ce que** la section radiale (21) fait saillie dans une coulisse de guidage (26), s'étendant dans la direction périphérique, prévue sur le bras d'essuie-glace (18) ou sur l'arbre d'essuie-glace (6) ou dans une partie structurale (29) fixée à ce dernier, laquelle coulisse de guidage comprend respectivement l'une des surfaces de butée conjuguées (23, 25) aux deux extrémités espacées dans la direction périphérique.

6. Entraînement d'essuie-glace selon l'une quelconque des revendications 3 à 5,
**caractérisé en ce que**
les première et deuxième surfaces de butée conjuguées (23, 25) sont réalisées sur deux côtés opposés l'un à l'autre d'une section radiale (28) de l'arbre d'essuie-glace (6) qui s'étend radialement vers l'extérieur, et **en ce que** la section radiale (28) fait saillie dans une coulisse de guidage (26), s'étendant dans la direction périphérique, prévue sur la platine de fixation (7) ou sur une partie structurale fixée à la platine de fixation (7), laquelle coulisse de guidage comprend respectivement une surface de butée d'extrémité (22, 24) aux deux extrémités espacées dans la direction périphérique.

7. Entraînement d'essuie-glace selon l'une quelconque des revendications précédentes,
**caractérisé en ce que**
la platine de fixation (7) comprend trois ouvertures de fixation (8) espacées les unes des autres dans la direction périphérique.
